# EUROPEAN PATENT APPLICATION

(11) **EP 4 585 911 A1**
(43) Date of publication of application: **16.07.2025**
(21) Application number: 23892983.0
(22) Date of filing: 18.04.2023
(51) Int. Cl.: G01N 23/04, G06T 7/00

(54) **DETECTION APPARATUS, DEFECT DETECTION METHOD AND APPARATUS, COMPUTER DEVICE, AND STORAGE MEDIUM**

(30) Priority: 24.11.2022 CN 202211479747
(71) Applicant: Jiangsu Contemporary Amperex Technology Limited, Changzhou, Jiangsu 213300 (CN)
(72) Inventor: GAO, Jinhuo, Changzhou, Jiangsu 213300 (CN); LI, Haibo, Changzhou, Jiangsu 213300 (CN); ZHANG, Fenglin, Changzhou, Jiangsu 213300 (CN); YU, Guangdong, Changzhou, Jiangsu 213300 (CN); LI, Houyong, Changzhou, Jiangsu 213300 (CN); LUO, Yu, Changzhou, Jiangsu 213300 (CN)
(74) Representative: Ran, Handong
(86) International application number: PCT/CN2023/088859
(87) International publication number: WO 2024/108882

(57) **Abstract**

A detection apparatus (100), a defect detection method, a defect detection apparatus, a computer device and a storage medium. The detection apparatus (100) comprises a ray source (101), a carrier tray (102), a detector (103) and an image detection apparatus (104), wherein the ray source (101) and the detector (103) are respectively arranged on two opposite sides of the carrier tray (102), and a ray from the ray source (101) is emitted towards the carrier tray (102); the detector (103) is used for receiving the ray that has penetrated through a target battery, and for generating a detection image of the target battery according to the ray that has penetrated through the target battery; the target battery is disposed on the carrier tray (102); the ray is a ray emitted from the ray source (101) to the target battery; and the image detection apparatus (104) is used for receiving the detection image and using a target deep learning model to perform defect detection on the detection image so as to obtain a defect detection result of the target battery.

## Description

### CROSS-REFERENCE TO RELATED APPLICATIONS

This application claims priority to Chinese Patent Application No. 202211479747.0, filed on November 24, 2022 and entitled "DETECTION APPARATUS, DEFECT DETECTION METHOD, APPARATUS, COMPUTER DEVICE, AND STORAGE MEDIUM", which is incorporated herein by reference in its entirety.

### TECHNICAL FIELD

This application relates to the technical field of defect detection, particularly to a detection apparatus, a defect detection method, an apparatus, a computer device, and a storage medium.

### BACKGROUND

Lithium-ion batteries are widely used in portable electronic products, electric vehicles, energy storage power plants, and other fields due to their high energy density, good safety, and long cycle life. Large-diameter cylindrical batteries have become an important trend in the future development of lithium-ion batteries.

During production, lithium-ion batteries, including cylindrical batteries, may experience various internal defects, such as electrode plate wrinkling, head folding, electrode plate cracking, dark trace on electrode plate, and excessively large gap of electrode plate. These internal defects affect the quality and safety of lithium-ion batteries. Therefore, detecting internal defects of lithium-ion batteries is of great significance. Currently, detecting internal defects of lithium-ion batteries is usually completed by manually inspecting the appearance.

However, current methods for internal defect detection have low accuracy.

### SUMMARY

In view of the above technical problems, it is necessary to provide a detection apparatus, a defect detection method, an apparatus, a computer device, and a storage medium that can improve the accuracy of internal defect detection.

According to a first aspect, this application provides a detection apparatus. The detection apparatus includes a radiation source, a sample tray, a detector, a control component, and an image inspection means, where the radiation source and the detector are respectively disposed on two opposite sides of the sample tray, and a radiation emission direction of the radiation source faces toward the sample tray; where
the detector is configured to receive a radiation that penetrates a target battery, and generate an inspection image of the target battery based on the radiation that penetrates the target battery, where the target battery is disposed on the sample tray, and the radiation is a radiation emitted by the radiation source to the target battery;
the image inspection means is configured to receive the inspection image, and perform defect detection on the inspection image by using a target deep learning model to obtain a defect detection result of the target battery, where the target deep learning model is a model trained by using inspection image samples of multiple batteries; and
the control component is configured to drive the radiation source and/or the detector to move along a first direction, where the first direction is consistent with a length direction of the target battery, so that the detection apparatus performs segmental detection on the target battery.

The detection apparatus includes the radiation source, the sample tray, the detector, and the image inspection means. The radiation source and the detector are respectively disposed on two opposite sides of the sample tray, and the radiation emission direction of the radiation source faces the sample tray. The detector is configured to receive the radiation that penetrates the target battery, and generate the inspection image of the target battery based on the radiation that penetrates the target battery. The target battery is disposed on the sample tray, and the radiation is a radiation emitted by the radiation source to the target battery. The image inspection means is configured to receive the inspection image, and perform defect detection on the inspection image by using the target deep learning model to obtain the defect detection result of the target battery. Since the radiation source in the detection apparatus can penetrate the target battery to reach the detector, the detector can generate the inspection image reflecting an internal cell of the target battery. Moreover, since the target deep learning model is a model trained by using the inspection image samples of the multiple batteries, the image inspection means can perform defect detection on the inspection image by using the target deep learning model after receiving the inspection image. Furthermore, in this application, the defect detection result of the target battery is obtained by using the target deep learning model instead of manually inspecting the appearance of the target battery. Therefore, the detection apparatus provided in this application addresses the problem of low defect detection accuracy caused by a manual factor in traditional technologies, thereby improving the accuracy of internal defect detection. Additionally, when the control component drives the radiation source and/or the detector to move along the first direction, the detection apparatus can realize segmental detection on the target battery, reducing a region for a single detection and improving the detection accuracy.

In an embodiment, the sample tray is configured to carry multiple target batteries, and the multiple target batteries are arranged on the sample tray along the first direction and/or a second direction; and the control component is further configured to: when the multiple target batteries are arranged on the sample tray along the first direction and/or the second direction, drive the radiation source and/or the detector to move along the first direction and/or the second direction, the first direction being different from the second direction.

In the detection apparatus, when the control component drives the radiation source and/or the detector to move along the first direction and/or the second direction, the detection apparatus can realize detection on multiple target batteries, thereby improving the efficiency of defect detection.

In an embodiment, the control component is further configured to drive the radiation source and/or the detector to move along a third direction, to make the detection apparatus operate when a distance between the radiation source and the sample tray is less than a distance between the detector and the sample tray, the third direction being a direction perpendicular to a battery carrying surface of the sample tray.

Since the detection apparatus operates when the distance between the radiation source and the sample tray is less than the distance between the detector and the sample tray, the detector can generate an amplified inspection image of the target battery, and the image inspection means performs defect detection based on the amplified inspection image, thereby improving the accuracy of defect detection.

In an embodiment, the control component is further configured to control, based on a preset target magnification, the radiation source and/or the detector to move along the third direction.

The detection apparatus can receive the inspection image at the preset target magnification, improving the efficiency and accuracy of defect detection.

In an embodiment, the target magnification is equal to a ratio of a first length to a second length, the first length being a length of the detector in a width direction, the second length being a minimum side length of a target region detected by the detector, and the target region being a surface region of the target battery detected by the detector.

In this detection apparatus, since the detection region of the detector is related to the length in the width direction of the detector, and this application sets the target magnification as the ratio of the first length to the second length, the detection apparatus in this application can obtain high-precision inspection images at the target magnification, thereby improving the accuracy of defect detection results.

In an embodiment, the detection apparatus further includes a tray rotation means connected to the sample tray, where the tray rotation means is configured to drive the sample tray to rotate at a first preset angle in the first preset angle.

The detection apparatus further includes a tray rotation means connected to the sample tray, where the tray rotation means is configured to drive the sample tray to rotate at a second preset angle in a first preset angle, so as to detect a defect of the target battery from different angles, thereby improving the accuracy of defect detection.

According to a second aspect, this application further provides a defect detection method, applied to the above detection apparatus. The defect detection method includes:
obtaining an inspection image, where the inspection image being an image generated after a radiation penetrates a target battery under inspection; and
obtaining a defect detection result of the target battery based on the inspection image and the target deep learning model, where the target deep learning model is a model trained by using inspection image samples of multiple batteries.

In the above defect detection method, the generated inspection image is obtained after the radiation penetrates the target battery under inspection, and then the defect detection result of the target battery is obtained based on the inspection image and the target deep learning model. Since the target deep learning model is a model trained by using the inspection image samples of the multiple batteries, defect detection can be performed on the inspection image by using the target deep learning model after the inspection image is received. Furthermore, in this application, the defect detection result of the target battery is obtained by using a machine instead of manually inspecting the appearance of the target battery. Therefore, the detection apparatus provided in this application addresses the problem of low defect detection accuracy caused by a manual factor in traditional technologies, thereby improving the accuracy of internal defect detection.

In an embodiment, the obtaining a defect detection result of the target battery based on the inspection image and the target deep learning model includes:
preprocessing the inspection image to obtain a target inspection image, where the preprocessing includes at least one of blurring processing, convolution processing, or enhancement processing; and
inputting the target inspection image into the target deep learning model to obtain the defect detection result of the target battery.

In the above method, preprocessing of at least one of blurring processing, convolution processing, or enhancement processing is performed on the inspection image to obtain the target inspection image, and then the target inspection image is input into the target deep learning model to obtain the defect detection result of the target battery. Since the defect detection result of the target battery is obtained by using the preprocessed target inspection image and the target deep learning model, a defect feature in the inspection image is more obvious, thereby improving the accuracy and efficiency of defect detection on the inspection image.

In an embodiment, the method further includes:
obtaining an inspection image sample set and label types corresponding to inspection image samples in the inspection image sample set; and
based on the inspection image sample set and the label types corresponding to inspection image samples, training an initial detection model to obtain the target deep learning model.

In the above method, the inspection image sample set and the label types corresponding to inspection image samples in the inspection image sample set are obtained, and based on the inspection image sample set and the label types corresponding to inspection image samples, the initial detection model is trained to obtain the target deep learning model. Since the target deep learning model is trained by using the inspection image sample set and the label types corresponding to inspection image samples, the image inspection means can automatically use the target deep learning model to perform defect detection on the inspection image after receiving the inspection image of the target battery, to obtain the defect detection result of the target battery. This involves no manual defect detection, saving human resources.

In an embodiment, the based on the inspection image sample set and the label types corresponding to inspection image samples, training an initial detection model to obtain the target deep learning model includes:
based on a training sample set and label types corresponding to inspection image samples in the training sample set, training the initial detection model to obtain an intermediate deep learning model; and
based on a validation sample set and label types corresponding to inspection image samples in the validation sample set, updating the intermediate deep learning model to obtain the target deep learning model;
where the inspection image sample set includes the training sample set and the validation sample set.

In the above method, the inspection image sample set includes the training sample set and the validation sample set, the initial detection model is trained based on the training sample set and the label types corresponding to inspection image samples in the training sample set to obtain the intermediate deep learning model, and the intermediate deep learning model is updated based on the validation sample set and the label types corresponding to inspection image samples in the validation sample set to obtain the target deep learning model. Since the target deep learning model is a model obtained by updating the intermediate deep learning model, the accuracy of the target deep learning model is improved, thereby improving the accuracy of defect detection.

In an embodiment, the method further includes:
updating the target deep learning model based on the defect detection result and an actual defect result of the target battery.

In the above method, the target deep learning model is updated based on the defect detection result and the actual defect result of the target battery, further improving the accuracy of the target deep learning model.

According to a third aspect, this application further provides a defect detection apparatus, and the defect detection apparatus includes:
an obtaining module, configured to obtain an inspection image, where the inspection image is an image generated after a radiation penetrates a target battery under inspection; and
a detection module, configured to obtain a defect detection result of the target battery based on the inspection image and a target deep learning model, where the target deep learning model is a model trained by using inspection image samples of multiple batteries.

In the above defect detection apparatus, the generated inspection image is obtained after the radiation penetrates the target battery under inspection, and then the defect detection result of the target battery is obtained based on the inspection image and the target deep learning model. Since the target deep learning model is a model trained by using the inspection image samples of the multiple batteries, defect detection can be performed on the inspection image by using the target deep learning model after the inspection image is received. Furthermore, in this application, the defect detection result of the target battery is obtained by using a machine instead of manually inspecting the appearance of the target battery. Therefore, the detection apparatus provided in this application addresses the problem of low defect detection accuracy caused by a manual factor in traditional technologies, thereby improving the accuracy of internal defect detection.

According to a fourth aspect, this application further provides a computer device. The computer device includes a memory and a processor, the memory stores a computer program, and when the processor executes the computer program, the steps of any one of the methods described above are implemented.

According to a fifth aspect, this application further provides a computer-readable storage medium. The computer-readable storage medium stores a computer program, and when the computer program is executed by a processor, the steps of any one of the methods described above are implemented.

According to a sixth aspect, this application further provides a computer program product. The computer program product includes a computer program, and when the computer program is executed by a processor, the steps of any one of the methods described above are implemented.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

A person of ordinary skill in the art can clearly understand various other advantages and benefits by reading the detailed description of the embodiments below. The accompanying drawings are merely intended to illustrate the embodiments and are not intended to limit this application. In addition, in all the accompanying drawings, same parts are indicated by same accompanying symbols. In the accompanying drawings:
FIG. 1 is a structural block diagram of a detection apparatus according to an embodiment of this application;
FIG. 2 is a schematic diagram of electrode plate wrinkling of a wound jelly roll;
FIG. 3 is a schematic diagram of electrode plate wrinkling of a finished cell injected with electrolyte;
FIG. 4 is a schematic diagram of electrode plate folding;
FIG. 5 is a schematic diagram of electrode plate cracking;
FIG. 6 is a schematic diagram of a dark trace on electrode plate;
FIG. 7 is a schematic diagram of an excessively large gap of electrode plate;
FIG. 8 is a schematic diagram of a normal cell;
FIG. 9 is a side view of a detection apparatus;
FIG. 10 is a three-dimensional top view of a detection apparatus;
FIG. 11 is a schematic diagram of segmentation of a target battery a;
FIG. 12 is a diagram of an internal structure of a computer device according to an embodiment of this application;
FIG. 13 is a schematic flowchart of a defect detection method according to an embodiment of this application;
FIG. 14 is a schematic flowchart of obtaining a defect detection result of a target battery according to an embodiment of this application;
FIG. 15 is a schematic flowchart of obtaining a target deep learning model according to an embodiment of this application;
FIG. 16 is another schematic flowchart of obtaining a target deep learning model according to an embodiment of this application;
FIG. 17 is an overall schematic flowchart of a defect detection method according to this application; and
FIG. 18 is a structural block diagram of a defect detection apparatus according to an embodiment of this application.

Description of reference signs:
100. detection apparatus, 101. radiation source, 102. sample tray, 103. detector, 104. image inspection means, 900. detection apparatus, 901. radiation source, 902. sample tray, 903. detector, 904. control component, 1000. detection apparatus, 1001. sample tray, 1002. detector, and 1003. target battery.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "include", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments in this application, "multiple" means at least two unless otherwise specifically stated.

In this specification, reference to "embodiment" means that specific features, structures, or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in the embodiments of this application as suitable to specific situations.

Currently, lithium-ion batteries are widely used in portable electronic products, electric vehicles, energy storage power stations, and other fields due to their high energy density, good safety, and long cycle life.

Large-diameter cylindrical batteries have become an important trend in the future development of lithium-ion batteries. Cylindrical batteries are used as an example. There is a process of cell winding in production of cylindrical batteries. Specifically, cut electrode plates and a separator are arranged in sequence, and then the electrode plates and separator are wound into a cylindrical layered roll through the rotation of a winding shaft, to obtain a cylindrical cell. Therefore, during production, cylindrical batteries can experience various internal defects, such as electrode plate wrinkling, head folding, electrode plate cracking, dark trace on electrode plate, and excessively large gap of electrode plate. These internal defects affect the quality and safety of cylindrical batteries. Hence, it is of great significance to detect internal defects in cylindrical batteries.

Typically, after the winding of a batch of cylindrical battery cells is completed, cells produced by winding machines are gathered to a logistics line, and then internal defects of cylindrical batteries are detected by manually inspecting the appearance of the cells and disassembling the cells. Specifically, after the cylindrical jelly rolls wound are put into a housing or electrolyte is injected, in manual inspection, the housing usually needs to be disassembled and then the cells are disassembled to observe internal defects. In some defect detection scenarios, the technology of computed tomography (Computed Tomograph, CT) scan is also used to sample internal defects of batteries.

However, manually inspecting the appearance of cells has low accuracy and is prone to problems such as false detection and missed detection, resulting in low defect detection accuracy. The manner of disassembling cells is prone to lead to the loss of normal cylindrical batteries, wasting a lot of manpower and material resources and increasing the costs. In the manner of using CT to detect internal defects of a battery, after the battery is rotated 360° multiple times by using CT to obtain an inspection image of the battery, three-dimensional reconstruction is performed on the inspection image of the battery. Generally, two-dimensional slicing is manually performed on reconstructed three-dimensional images. Then, defect detection is performed based on the two-dimensional slicing. Therefore, using CT to detect internal defects of batteries is costly and inefficient.

In view of the above technical problems, it is necessary to provide a detection apparatus, a defect detection method, an apparatus, a computer device, and a storage medium.

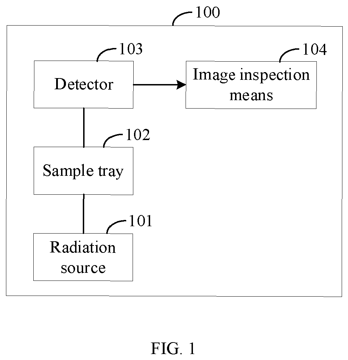

FIG. 1 is a structural block diagram of a detection apparatus according to an embodiment of this application. As shown in FIG. 1, an embodiment of this application provides a detection apparatus 100. The detection apparatus 100 includes a radiation source 101, a sample tray 102, a detector 103, and an image inspection means 104.

The radiation source 101 and the detector 103 are respectively disposed on two opposite sides of the sample tray 102, and a radiation emission direction of the radiation source 101 faces the sample tray 102. A target battery under inspection is placed on the sample tray 102, and the radiation source 101 emits a radiation to the target battery. Thus, the detector 103 can receive the radiation that penetrates the target battery, and generate an inspection image of the target battery based on the radiation that penetrates the target battery.

In this embodiment, the radiation emitted by the radiation source 101 being X-rays is used as an example. It can be understood that the radiation emitted by the radiation source 101 includes but is not limited to X-rays, α rays, β rays, γ rays, and the like.

The image inspection means 104 is configured to receive the inspection image and perform defect detection on the inspection image by using a target deep learning model to obtain a defect detection result of the target battery. The target deep learning model is a model trained by using inspection image samples of multiple batteries.

In this embodiment, the target battery being a cylindrical battery is used as an example. The target battery may alternatively be a prismatic battery, a specially shaped battery, or the like. The target deep learning model can be a convolutional neural network (Convolutional Neural Networks, CNN), a recurrent neural network (Recurrent Neural Network, RNN), other deep learning networks, machine learning networks, or the like. The inspection image generated by the detector includes but is not limited to a grayscale image, a color image, or the like.

The image inspection means 104 has a built-in target deep learning model. The target deep learning model can be a model trained by other computer devices based on inspection image samples of multiple batteries and then sent to the image inspection means 104, or can be a model trained by the image inspection means 104 by using inspection image samples of multiple batteries.

In an embodiment, a computer device collects inspection image samples of multiple cylindrical batteries. The inspection image samples include normal image samples and abnormal image samples. The abnormal image samples include abnormal images of the cylindrical batteries with various types of internal defects. For example, the abnormal image samples include an image sample of wrinkling, an image sample of head folding, an image sample of electrode plate cracking, an image sample of dark trace on electrode plate, an image sample of excessively large gap of electrode plate, and the like.

Furthermore, the computer device labels the collected inspection image samples. For example, label types of the inspection image samples include electrode plate wrinkling, head folding, electrode plate cracking, dark trace on electrode plate, excessively large gap of electrode plate, normal image, and the like. It should be noted that in labeling a collected inspection image sample, the computer device can not only determine a defect type of the inspection image sample but also determine a defect position of the inspection image sample.

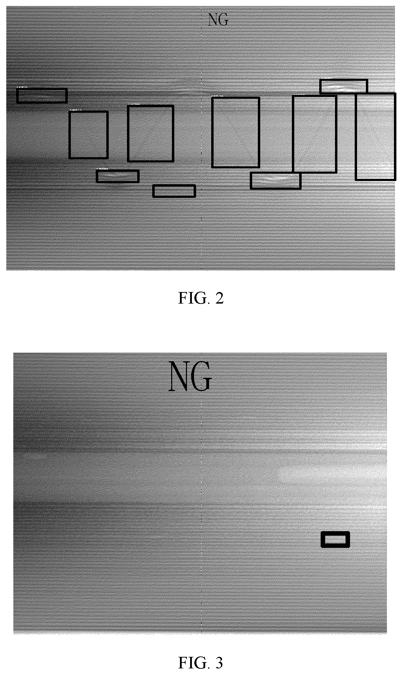

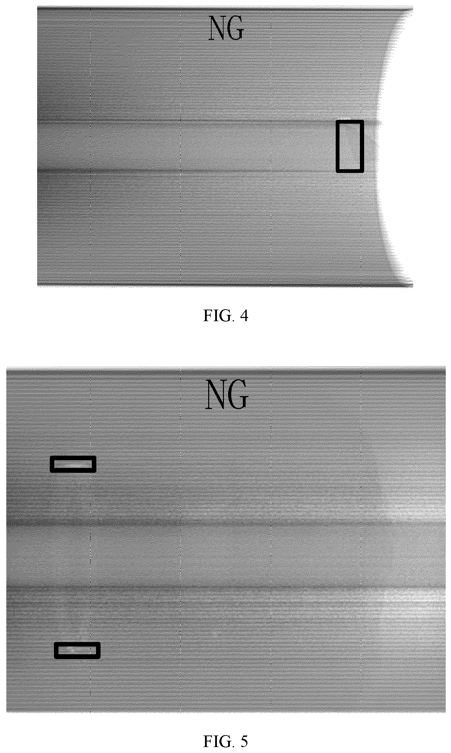

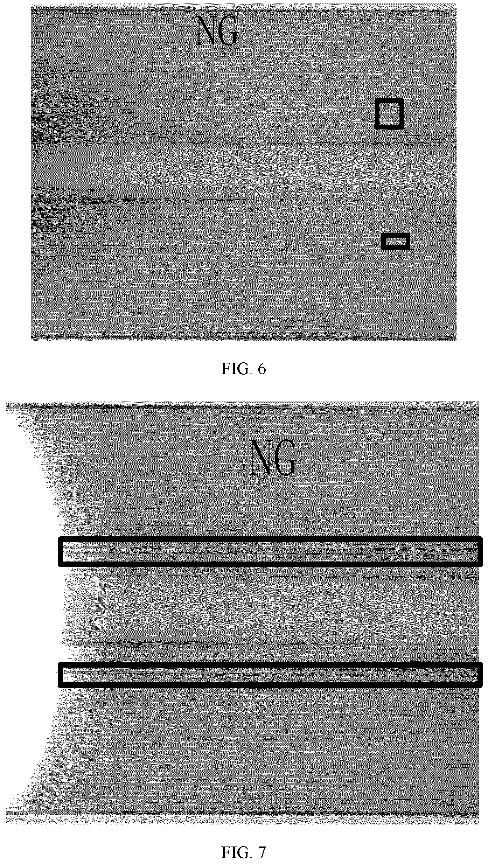

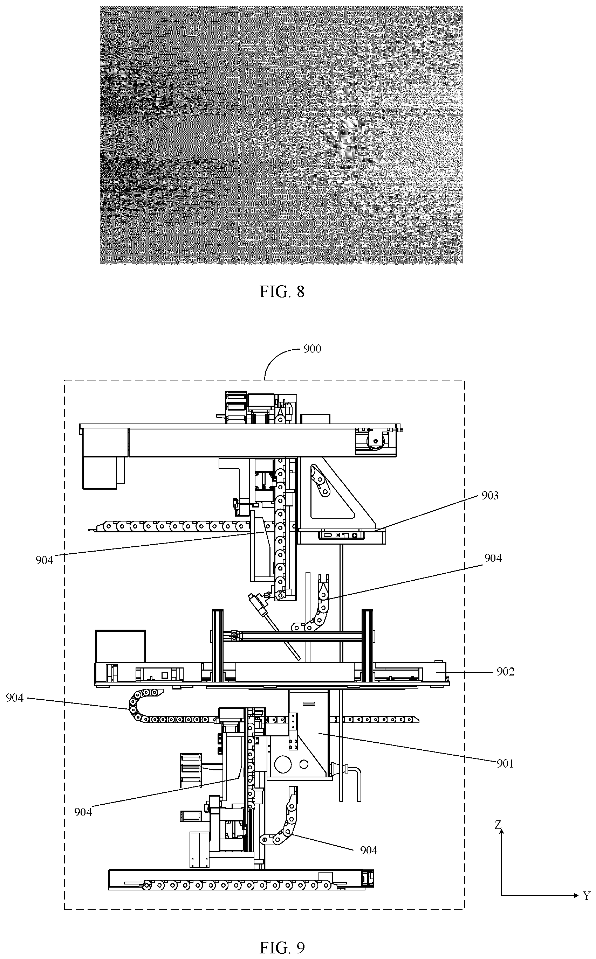

FIG. 2 to FIG. 8 are schematic diagrams of inspection image samples of this application. FIG. 2 is a schematic diagram of electrode plate wrinkling of a wound jelly roll. FIG. 3 is a schematic diagram of electrode plate wrinkling of a finished cell injected with electrolyte. FIG. 4 is a schematic diagram of electrode plate folding. FIG. 5 is a schematic diagram of electrode plate cracking. FIG. 6 is a schematic diagram of a dark trace on electrode plate. FIG. 7 is a schematic diagram of an excessively large gap of electrode plate. FIG. 8 is a schematic diagram of a normal cell. In FIGs. 2 to 8, black framed parts indicate internal defects of inspection image samples, where NG represents an abnormal cell and OK represents a normal cell.

Furthermore, the computer device trains an initial deep learning model based on the labeled inspection image samples. When a training stop condition is met, the training can be stopped and the target deep learning model can be determined. The training stop condition can be that a difference between a defect detection result output by the initial deep learning model and an actual defect result of the inspection image sample is less than a preset threshold. Certainly, the computer device can alternatively determine the target deep learning model in other methods. Then, the image inspection means 104 obtains the target deep learning model.

When defect detection needs to be performed on the target battery, the target battery is placed on the sample tray 102 of the detection apparatus 100. The radiation source 101 emits X-rays to the sample tray 102. The X-rays penetrate a cell of the target battery and are obtained by the detector 103. The detector 103 generates the inspection image of the target battery based on the radiation that penetrates the target battery. Then, the detector 103 sends the inspection image of the target battery to the image inspection means 104. The image inspection means 104 inputs the inspection image of the target battery into the target deep learning model so as to obtain the defect detection result of the target battery. The defect detection result can include passed (OK) or failed (NG), and can also include a defect type and defect position of the target battery.

The detection apparatus provided in this embodiment includes the radiation source, the sample tray, the detector, and the image inspection means. The radiation source and the detector are respectively disposed on two opposite sides of the sample tray, and the radiation emission direction of the radiation source faces the sample tray. The detector is configured to receive the radiation that penetrates the target battery, and generate the inspection image of the target battery based on the radiation that penetrates the target battery. The target battery is disposed on the sample tray, and the radiation is a radiation emitted by the radiation source to the target battery. The image inspection means is configured to receive the inspection image, and perform defect detection on the inspection image by using the target deep learning model to obtain the defect detection result of the target battery. Since the radiation source in the detection apparatus can penetrate the target battery to reach the detector, the detector can generate the inspection image reflecting an internal cell of the target battery. Moreover, since the target deep learning model is a model trained by using the inspection image samples of the multiple batteries, the image inspection means can perform defect detection on the inspection image by using the target deep learning model after receiving the inspection image. Furthermore, in this application, the defect detection result of the target battery is obtained by using the target deep learning model instead of manually inspecting the appearance of the target battery. Therefore, the detection apparatus provided in this application addresses the problem of low defect detection accuracy caused by a manual factor in traditional technologies, thereby improving the accuracy of internal defect detection.

**In** some embodiments, the detection apparatus further includes a control component, and the control component is configured to drive the radiation source and/or the detector to move.

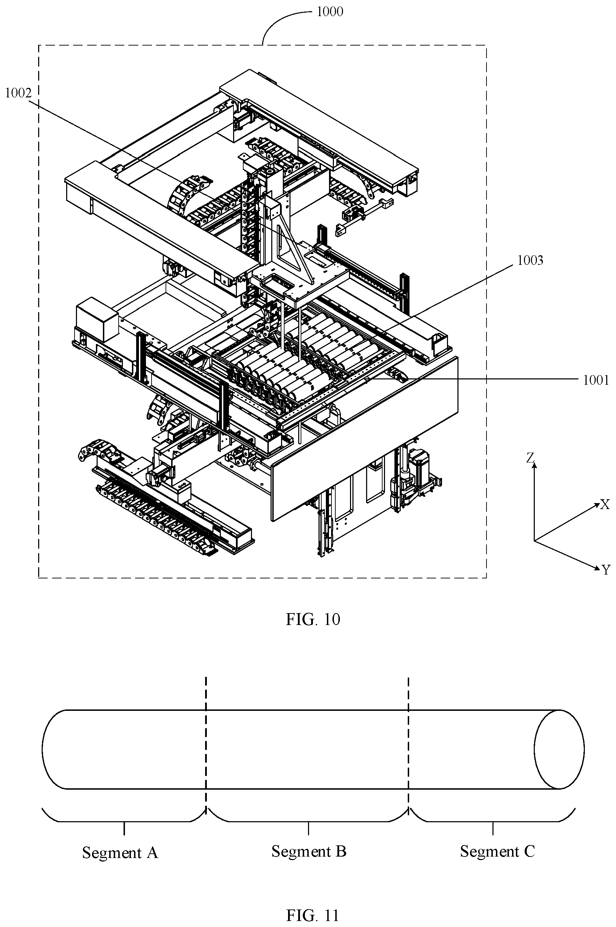

FIGs. 9 and 10 are structural schematic diagrams of detection apparatuses in this application. FIG. 9 is a side view of a detection apparatus and FIG. 10 is a three-dimensional top view of a detection apparatus. It can be understood that the detection apparatus may include but is not limited to the structures shown in FIGs. 9 and 10.

As shown in FIG. 9, a detection apparatus 900 further includes a control component 904. The control component 904 is configured to drive a radiation source 901 and/or a detector 903 to move. The target battery is placed on a sample tray 902.

FIG. 10 shows a top view of a detection apparatus 1000. A target battery 1003 is placed on a sample tray 1001. A radiation source (not shown in FIG. 10 due to obstruction) emits a radiation to the target battery 1003, and a detector 1002 receives a radiation that penetrates the target battery 1003, and generates an inspection image of the target battery 1003 based on the radiation that penetrates the target battery 1003.

For example, with reference to FIGs. 9 and 10, the control component 904 can include a motor and a chain. After the control component receives a moving signal, the motor drives the chain, thereby driving the radiation source 901 and/or the detector 903 to move.

When the control component 904 drives the radiation source 901 to move, X-rays emitted by the radiation source 901 also move accordingly. Thus, the control component 904 can adjust an emission position of the X-rays to adjust a detection position of the detection apparatus on the target battery.

Similarly, when the control component 904 drives the detector 903 to move, a receiving position of the detector 903 moves accordingly. Thus, the control component 904 can adjust a generation region of the inspection image of the target battery.

Generally, the control component 904 can drive the radiation source 901 and the detector 903 to move synchronously to improve the quality of the generated inspection image, thereby improving the accuracy of internal defect detection.

In this embodiment, the detection apparatus further includes a control component, configured to drive the radiation source and/or the detector to move. Thus, the detection apparatus provided in this embodiment can adjust the detection position of the detection apparatus on the target battery and the generation region of the inspection image of the target battery at any time, providing strong flexibility and operability.

In some embodiments, the control component is further configured to drive the radiation source and/or the detector to move along a first direction, the first direction being consistent with the length direction of the target battery.

In this embodiment, the first direction being consistent with the length direction of the target battery means that the included angle between the first direction and the length direction of the target battery is not less than a preset angle of the first direction. The preset angle of the first direction can be set according to actual needs, for example, a value of 0° to 10°. When the first direction is consistent with the length direction of the target battery, the detection apparatus can realize segmental detection of the target battery when the control component drives the radiation source and/or the detector to move along the first direction.

FIG. 11 is a schematic diagram of the segmentation of target battery a. With reference to FIGs. 9 to 11, here, the first direction is taken as a direction X in a spatial coordinate system, and an included angle between the length direction of the target battery and the direction X is 0°. That is, the direction X is exactly the same as the length direction of the target battery for illustration. When the control component drives the radiation source and/or the detector to move along the direction X, the detector can receive an inspection image segment A, inspection image segment B, and inspection image segment C of the target battery a. Then, the image inspection means receives the inspection image segment A, inspection image segment B, and inspection image segment C of the target battery a to obtain the defect detection results for each length segment of the target battery a.

In this embodiment, the control component is further configured to drive the radiation source and/or the detector to move along the first direction, the first direction being consistent with the length direction of the target battery. Therefore, when the control component drives the radiation source and/or the detector to move along the first direction, the detection apparatus can realize segmental detection of the target battery, reducing the region of a single detection and improving the detection accuracy.

In some embodiments, the sample tray is configured to carry multiple target batteries, and the multiple target batteries are arranged on the sample tray along the first direction and/or a second direction; the control component is further configured to: when the multiple target batteries are arranged on the sample tray along the first direction and/or the second direction, drive the radiation source and/or the detector to move along the first direction and/or the second direction, the first direction being different from the second direction.

In this embodiment, as shown in FIG. 10, the sample tray 1001 can carry multiple target batteries, and the multiple target batteries are arranged on the sample tray 1001 along the first direction and a second direction. Furthermore, in a case that the multiple target batteries are arranged on the sample tray 1001 along the first direction and the second direction, the detection apparatus can perform detection on multiple target batteries when the control component drives the radiation source and/or the detector to move along the first direction and/or the second direction.

FIG. 10 shows the arrangement of the target batteries along the first direction and the second direction. It can be understood that the target batteries can also be arranged only along the first direction. Thus, the detection apparatus can realize the detection of multiple target batteries when the control component drives the radiation source and/or the detector to move along the first direction. The target batteries can also be arranged only along the second direction. Thus, the detection apparatus can realize the detection of multiple target batteries when the control component drives the radiation source and/or the detector to move along the second direction.

Still referring to FIGs. 9 and 10, the second direction being the direction Y in the spatial coordinate system is used as an example herein. When the control component drives the radiation source and/or the detector to move along the direction Y, the detector can receive an inspection image of a target battery a, an inspection image of a target battery b, and an inspection image of a target battery c. Then, within a relatively short period, the image inspection means can receive the inspection image of the target battery a, the inspection image of the target battery b, and the inspection image of the target battery c to obtain defect detection results of the target battery a, the target battery b, and the target battery c.

In this embodiment, the sample tray is configured to carry multiple target batteries, and the multiple target batteries are arranged on the sample tray along the first direction and/or the second direction; the control component is further configured to drive the radiation source and/or the detector to move along the first direction and/or the second direction. Therefore, when the control component drives the radiation source and/or the detector to move along the first direction and/or the second direction, the detection apparatus can realize the detection of multiple target batteries, thereby improving the efficiency of defect detection.

In an embodiment, the sample tray 902 can extend or retract in a single direction. For example, the sample tray 902 extends in the direction Y to facilitate placing multiple target batteries on the sample tray 902 and then retracts the sample tray 902 to the original position.

Furthermore, the radiation source 901 emits a radiation to the target battery, and then the control component 904 synchronously drives the radiation source 901 and the detector 903 to move along the direction X at a first speed cycle by a first preset distance. For example, the control component 904 synchronously drives the radiation source 901 and the detector 903 to move 10 cm along the direction X every 1s and to stay for 1s after moving every 1 cm, so that the detector 903 receives the radiation that penetrates the target battery a and generates an inspection image of the target battery a for each segment based on the radiation that penetrates the target battery a.

Furthermore, after the control component 904 synchronously drives the radiation source 901 and the detector 903 to move along the direction X at a certain speed cycle by a preset distance, it continues to move along the direction X at a second speed cycle by a second preset distance. For example, after the control component 904 synchronously drives the radiation source 901 and the detector 903 to move 50 cm along the direction X, the control component 904 then synchronously drives the radiation source 901 and the detector 903 to move 10 cm along the direction Y to detect the target battery b. Then, the control component continues to drive the radiation source 901 and the detector 903 to move along the direction X at the first speed cycle by the first preset distance to complete the defect detection of target battery b, and so on. Details are not described herein. It can be understood that this is just one way of moving multiple target batteries. The control component 904 can alternatively drive the radiation source 901 and/or the detector 903 to move in other ways. For example, the control component first drives the radiation source 901 and/or the detector 903 to move in the direction Y and then move in the direction X. This embodiment is not limited to thereto.

In some embodiments, the control component is further configured to drive the radiation source and/or the detector to move along a third direction, to make the detection apparatus operate when a distance between the radiation source and the sample tray is less than a distance between the detector and the sample tray, the third direction being a direction perpendicular to a battery carrying surface of the sample tray.

In this embodiment, the control component can also drive the radiation source and/or the detector to move along the third direction. When the control component drives the radiation source to move along the third direction, it can adjust the distance between the radiation source and the sample tray. When the control component drives the detector to move along the third direction, it can adjust the distance between the detector and the sample tray.

When the distance between the radiation source and the sample tray is less than the distance between the detector and the sample tray, the detector can generate an amplified inspection image of the target battery. Therefore, before starting defect detection of the target battery, the control component is first used to drive the radiation source and/or the detector to move along the third direction, so that the detection apparatus operates when the distance between the radiation source and the sample tray is less than the distance between the detector and the sample tray, thereby obtaining an amplified inspection image of the target battery.

In this embodiment, the control component is further configured to drive the radiation source and/or the detector to move along a third direction, to make the detection apparatus operate when a distance between the radiation source and the sample tray is less than a distance between the detector and the sample tray, the third direction being a direction perpendicular to a battery carrying surface of the sample tray. Since the detection apparatus operates when the distance between the radiation source and the sample tray is less than the distance between the detector and the sample tray, the detector can generate an amplified inspection image of the target battery, and the image inspection means performs defect detection based on the amplified inspection image, thereby improving the accuracy of defect detection.

In some embodiments, the control component is further configured to control, based on a preset target magnification, the radiation source and/or the detector to move along the third direction.

In this embodiment, when amplifying the target battery, it is necessary to control the magnification. Therefore, before performing defect detection on the target battery, it is necessary to control the radiation source and/or the detector to move along the third direction according to the target magnification to adjust the distance between the radiation source and the sample tray and the distance between the detector and the sample tray.

With reference to FIGs. 9 and 10, taking the third direction as the Z direction as an example, when controlling the radiation source and/or the detector to move along the Z direction according to the preset target magnification, based on the principle of pinhole imaging, the image inspection means can obtain the inspection image at the preset target magnification, where the target magnification is the ratio of the size of the amplified inspection image to the actual size of the target battery in the same direction. For example, if the target battery is a cylindrical battery, the cylindrical battery has a diameter of 5 cm, and a diameter of an amplified inspection image of the cylindrical battery is 20 cm, the magnification is 4 times.

In this embodiment, the control component is further configured to control, based on a preset target magnification, the radiation source and/or the detector to move along the third direction. Therefore, the image inspection means can receive the inspection image at the preset target magnification, improving the efficiency and accuracy of defect detection.

In some embodiments, the target magnification is equal to a ratio of a first length to a second length, the first length being a length of the detector in a width direction, the second length being a minimum side length of a target region detected by the detector, and the target region being a surface region of the target battery detected by the detector.

In this embodiment, assuming the first length is w, that is, the length of the detector in the width direction is w, and the second length is d, that is, the minimum side length of the target region of the target battery detected by the detector is d, then the preset target magnification can be w/d.

With reference to FIGs. 9 and 10, if the target battery is a cylindrical battery, the second length is the diameter of a single cylindrical battery; if the target battery is a rectangular parallelepiped, the second length is the width of the rectangular parallelepiped.

In this embodiment, the target magnification is equal to a ratio of a length of the detector in a width direction to a minimum side length of a target region detected by the detector, and the target region being a surface region of the target battery detected by the detector. Since the detection region of the detector is related to the length in the width direction of the detector, and this application sets the target magnification as the ratio of the first length to the second length, the detection apparatus in this application can obtain high-precision inspection images at the target magnification, thereby improving the accuracy of defect detection results.

In some embodiments, the detection apparatus further includes a tray rotation means connected to the sample tray, where the tray rotation means is configured to drive the sample tray to rotate at a second preset angle in the first preset angle.

To improve the accuracy of defect detection, it is necessary to perform defect detection on the target battery from different angles, generating inspection images from different angles. Therefore, in this embodiment, the detection apparatus further includes a tray rotation means connected to the sample tray. For example, the tray rotation means can be a roller, a stepper motor, or a rotary hydraulic device.

The tray rotation means is configured to drive the sample tray to rotate according to the second preset angle in a first preset angle, that is, to drive the target battery to rotate according to the second preset angle within the first preset angle. Thus, the image inspection means receives inspection images of the target battery at each rotation angle. The first preset angle can be any angle within 360°, for example, 180°.

For example, when the target battery is a cylindrical battery, since the cylindrical battery is bilaterally symmetrical, the tray rotation means does not need to drive the target battery to rotate 360°, but only needs to drive the target battery to rotate 180° to perform defect detection on the target battery from different angles. For the manner of detecting internal defects of batteries using CT, the detection apparatus provided in this application further reduces the rotation time of the sample tray, thus reducing the defect detection time and further improving the efficiency of defect detection while meeting the accuracy requirement of defect detection.

Furthermore, within the first preset angle, the tray rotation means can achieve defect detection of the target battery from different angles by the detection apparatus according to the second preset angle.

If the first preset angle is θ1, the second preset angle is θ2, and the number of rotations of the tray rotation means within the first preset angle is n, θ2*(n+1)=θ1. That is, the first preset angle θ1 is equally divided by the second preset angle θ2.

The first preset angle θ1 and the second rotation angle θ2 can be determined according to the detection accuracy and detection efficiency. The larger the first preset angle, the smaller the second preset angle, and the higher the detection accuracy. The smaller the first preset angle, the larger the second preset angle, and the higher the detection efficiency.

In an embodiment, the first preset angle is 180° and the second preset angle is 45°, that is, the tray rotation means rotates 3 times at intervals of 45° each time, to perform detection on the target battery a at 4 different angles. For example, when the tray rotation means is in position 1, the detector generates an inspection image 1 of the target battery a. Then, the tray rotation means rotates 45° to reach a position 2. When the tray rotation means is at the position 2, the detector generates an inspection image 2 of the target battery a. Furthermore, the tray rotation means continues to rotate 45° to reach a position 3. When the tray rotation means is at the position 3, the detector generates an inspection image 3 of the target battery a. Finally, the tray rotation means rotates 45° again to reach a position 4. When the tray rotation means is at the position 4, the detector generates an inspection image 4 of the target battery a. In this process, the tray rotation means rotates 180° in total, completing the detection of the target battery a at four angles.

The detection apparatus in this embodiment further includes a tray rotation means connected to the sample tray, where the tray rotation means is configured to drive the target battery to rotate at a second preset angle in a first preset angle, so as to detect a defect of the target battery from different angles, thereby improving the accuracy of defect detection.

Based on the same inventive concept, an embodiment of this application further provides a defect detection method applied to the above detection apparatus. The defect detection method provided in this embodiment of this application can be applied to the image inspection means shown in FIG. 1.

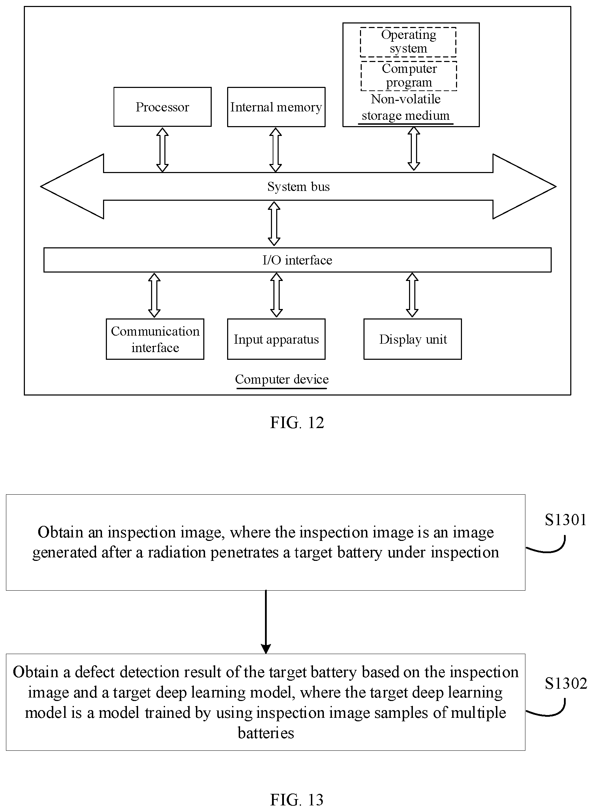

FIG. 13 is an internal structural diagram of a computer device according to an embodiment of this application. In this embodiment of this application, a computer device is provided, and the computer device can be an image inspection means whose internal structural diagram can be as shown in FIG. 13. The computer device includes a processor, a memory, a communication interface, a display, and an input apparatus that are connected via a system bus. The processor of the computer device is configured to provide computing and control capabilities. Memories of the computer device include a non-volatile storage medium and an internal memory. The non-volatile storage medium stores an operating system and a computer program. The internal memory provides an environment for the operation of the operating system and computer program in the non-volatile storage medium. The communication interface of the computer device is configured to communicate with an external terminal in a wired or wireless manner. The wireless manner can be implemented through Wi-Fi, a mobile cellular network, NFC (near field communication), or other technologies. When the computer program is executed by the processor, the defect detection method is implemented. The display of the computer device may be a liquid crystal display or an electronic ink display. The input apparatus of the computer device may be a touch layer overlaid on the display, or a button, trackball, or trackpad provided on a housing of the computer device, or an external keyboard, trackpad, mouse, or the like

Those skilled in the art can understand that the structure shown in FIG. 13 is only a block diagram of a partial structure related to the solution of this application and does not constitute a limitation on the computer device on which the solution of this application is applied. Specifically, the computer device can include more or fewer components than shown in the figure, combine some components, or have a different component arrangement.

In this embodiment, the method being applied to the image inspection means alone is used as an example. It can be understood that the method can also be applied to other computer devices. For example, the method can be applied to servers, and also to systems including terminals and servers, and realized through interaction between terminals and servers. The terminal can include but is not limited to various personal computers, notebook computers, smartphones, and tablet computers. The server can be implemented as a standalone server or a server cluster composed of multiple servers.

FIG. 13 is a schematic flowchart of a defect detection method according to an embodiment of this application. The method can be applied to the image inspection means shown in FIG. 1. In an embodiment, as shown in FIG. 13, the method includes the following steps.

S1301. Obtain an inspection image, where the inspection image is an image generated after a radiation penetrates a target battery under inspection.

In this embodiment, the target battery is placed on a sample tray of a detection apparatus. A radiation source emits X-rays to the sample tray. The X-rays penetrate a cell of the target battery and then are obtained by a detector. The detector generates the inspection image of the target battery based on the radiation that penetrates the target battery. Then, the detector sends the inspection image of the target battery to the image inspection means, allowing the image inspection means to obtain the inspection image of the target battery.

S1302. Obtain a defect detection result of the target battery based on the inspection image and a target deep learning model, where the target deep learning model is a model trained by using inspection image samples of multiple batteries.

In this embodiment, after obtaining the inspection image, the image inspection means inputs the inspection image of the target battery into the target deep learning model to obtain the defect detection result of the target battery.

The model trained by using inspection image samples of multiple batteries follows the same principle as described above for the detection apparatus. Details are not repeated herein again.

In the defect detection method provided in this embodiment, the generated inspection image is obtained after the radiation penetrates the target battery under inspection, and then the defect detection result of the target battery is obtained based on the inspection image and the target deep learning model. Since the target deep learning model is a model trained by using the inspection image samples of the multiple batteries, defect detection can be performed on the inspection image by using the target deep learning model after the inspection image is received. Furthermore, in this application, the defect detection result of the target battery is obtained by using a machine instead of manually inspecting the appearance of the target battery. Therefore, the detection apparatus provided in this application addresses the problem of low defect detection accuracy caused by a manual factor in traditional technologies, thereby improving the accuracy of internal defect detection.

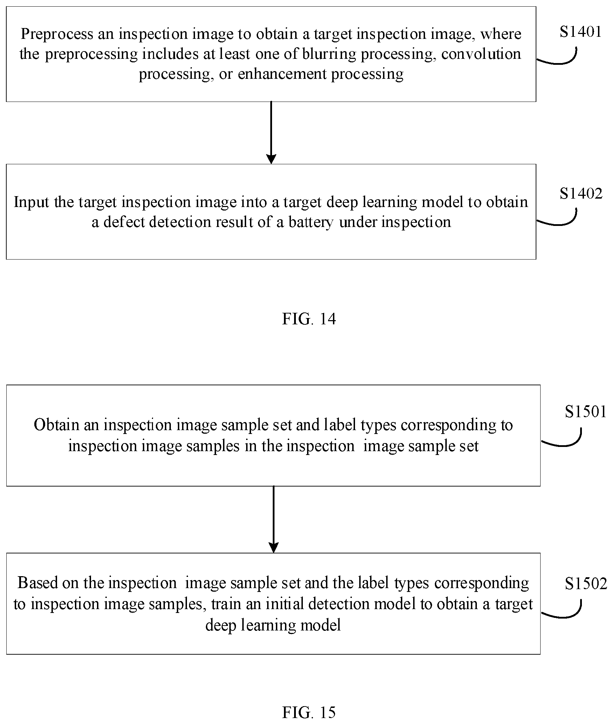

FIG. 14 is a schematic flowchart of obtaining a defect detection result of a target battery according to an embodiment of this application. Referring to FIG. 14, this embodiment relates to an optional implementation of how to obtain a defect detection result of a target battery. Based on the above embodiment, the obtaining a defect detection result of the target battery based on the inspection image and a target deep learning model in S1302 includes the following steps.

S1401. Preprocess the inspection image to obtain a target inspection image, where the preprocessing includes at least one of blurring processing, convolution processing, or enhancement processing.

In this embodiment, to improve the accuracy of defect detection, after obtaining the inspection image of the target battery, the image inspection means needs to preprocess the inspection image to obtain the target inspection image.

The preprocessing includes at least one of blurring processing, convolution processing, or enhancement processing. Blurring processing removes unnecessary features of the inspection image, such as noise and interference lines, and removes interference parts in the inspection image of the target battery other than cells, making necessary features of the inspection image clearer, thereby improving defect recognition.

Convolution processing uses a template, that is, a convolution kernel. For example, a 3×3 convolution kernel is used to traverse all pixels in the inspection image, the value of the center pixel of the template is replaced with a weighted average grayscale value of neighboring pixels determined by the template. Defect features of the inspection image undergone convolution processing are more obvious and easier to recognize.

Enhancement processing adjusts the brightness and contrast of the image, highlighting the electrode line and abnormal parts of the electrode line, thereby making the defect features of the inspection image more prominent.

In an embodiment, after obtaining the inspection image of the target battery, the image inspection means sequentially performs blurring processing, convolution processing, and enhancement processing on the inspection image to obtain the target inspection image.

S1402. Input the target inspection image into the target deep learning model to obtain the defect detection result of the target battery.

In this embodiment, the image inspection means inputs the preprocessed target inspection image into the target deep learning model to obtain the defect detection result of the target battery. It should be noted that when the target deep learning model is trained by using the inspection image samples of multiple batteries, the inspection image sample is similarly preprocessed to obtain a preprocessed target inspection image sample, and then the initial deep learning model is trained by using labeled inspection image samples. When a training stop condition is met, the training can be stopped and the target deep learning model can be determined.

In this embodiment, preprocessing of at least one of blurring processing, convolution processing, or enhancement processing is performed on the inspection image to obtain the target inspection image, and then the target inspection image is input into the target deep learning model to obtain the defect detection result of the target battery. Since the defect detection result of the target battery is obtained by using the preprocessed target inspection image and the target deep learning model, a defect feature in the inspection image is more obvious, thereby improving the accuracy and efficiency of defect detection on the inspection image.

FIG. 15 is a schematic flowchart of obtaining a target deep learning model according to an embodiment of this application. Referring to FIG. 15, this embodiment relates to an optional implementation of how to obtain a target deep learning model. Based on the above embodiment, the above defect detection method further includes the following steps.

S1501. Obtain an inspection image sample set and label types corresponding to inspection image samples in the inspection image sample set.

In this embodiment, the detection apparatus detects multiple cylindrical batteries to collect inspection image samples of a certain quantity, so as to obtain the inspection image sample set. The inspection image samples include normal image samples and abnormal image samples. For example, more than 2000 abnormal image samples are collected, with at least 100 abnormal image samples for each type of defect, to accurately identify various types of defects. For example, the abnormal image samples include an image sample of wrinkling, an image sample of head folding, an image sample of electrode plate cracking, an image sample of dark trace on electrode plate, an image sample of excessively large gap of electrode plate, and the like.

Furthermore, the image inspection means labels the collected inspection image samples. For example, the label types of the inspection image samples include electrode plate wrinkling, electrode plate folding, electrode plate cracking, dark trace on electrode plate, excessively large gap of electrode plate, normal image, and the like. Thus, the image inspection means obtains the inspection image sample set and label types corresponding to inspection image samples in the inspection image sample set.

S1502. Based on the inspection image sample set and the label types corresponding to inspection image samples, train an initial detection model to obtain the target deep learning model.

In this embodiment, after the inspection image sample set and the label types corresponding to inspection image samples in the inspection image sample set are obtained, the image inspection means can train, based on the inspection image sample set and the label types corresponding to inspection image samples, the initial detection model to obtain the target deep learning model. For example, the image inspection means trains the initial deep learning model based on the inspection image sample set and the label types corresponding to inspection image samples. When a training stop condition is met, the training can be stopped and the target deep learning model can be determined. The training stop condition can be that a difference between a defect detection result output by the initial deep learning model and an actual defect result of the inspection image sample is less than a preset threshold. Certainly, the computer device can alternatively determine the target deep learning model in other methods.

In this embodiment, the inspection image sample set and the label types corresponding to inspection image samples in the inspection image sample set are obtained, and based on the inspection image sample set and the label types corresponding to inspection image samples, the initial detection model is trained to obtain the target deep learning model. Since the target deep learning model is trained by using the inspection image sample set and the label types corresponding to inspection image samples, the image inspection means can automatically use the target deep learning model to perform defect detection on the inspection image after receiving the inspection image of the target battery, to obtain the defect detection result of the target battery. This involves no manual defect detection, saving human resources.

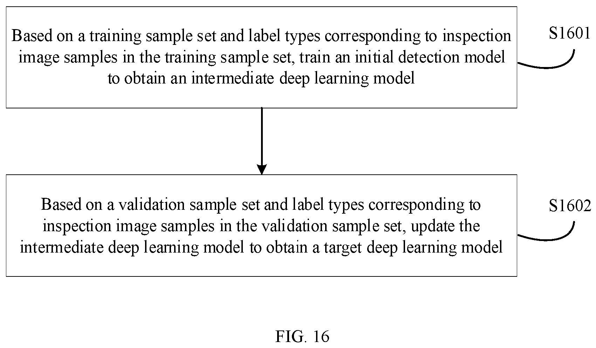

FIG. 16 is another schematic flowchart of obtaining a target deep learning model according to an embodiment of this application. Referring to FIG. 16, this embodiment relates to an optional implementation of how to obtain a target deep learning model. Based on the above embodiment, the inspection image sample set includes a training sample set and a validation sample set. The S1502 of based on the inspection image sample set and label types corresponding to inspection image samples training an initial detection model to obtain the target deep learning model includes the following steps.

S1601. Based on a training sample set and label types corresponding to inspection image samples in the training sample set, train the initial detection model to obtain an intermediate deep learning model.

In this embodiment, the inspection image sample set is divided into a training sample set and a validation sample set. First, the image inspection means trains the initial detection model based on the training sample set and label types corresponding to inspection image samples in the training sample set to obtain an intermediate deep learning model.

S1602. Based on a validation sample set and label types corresponding to inspection image samples in the validation sample set, update the intermediate deep learning model to obtain the target deep learning model.

In this embodiment, after the intermediate deep learning model is obtained, the intermediate deep learning model is updated based on a validation sample set and label types corresponding to inspection image samples in the validation sample set, so as to obtain the target deep learning model.

For example, the image inspection means inputs the inspection image samples in the validation sample set into the intermediate deep learning model to obtain the defect detection results of the inspection image samples predicted by the intermediate deep learning model. Then, the image inspection means can compare the predicted defect detection results with the label types corresponding to the inspection image samples in the validation sample set to determine the accuracy of the intermediate deep learning model and further optimize the intermediate deep learning model.

For example, when the predicted defect detection results and the label types corresponding to the inspection image samples in the validation sample set are different, the image inspection means automatically corrects the parameters of the intermediate deep learning model. It can be understood that the predicted defect detection results and the label types corresponding to the inspection image samples in the validation sample set being different can either mean different defect types or different defect positions. For example, for the inspection image sample of the battery 1, if the defect detection result output by the intermediate deep learning model is wrinkling of the electrode plate, but the actual label type of the inspection image sample of the battery 1 is cracking of the electrode plate, the image inspection means can automatically correct the parameters of the intermediate deep learning model. For the inspection image sample of the battery 1, if the defect detection result output by the intermediate deep learning model is wrinkling of the electrode plate at position A, but the actual label type of the inspection image sample of the battery 1 is wrinkling of the electrode plate at position B, the image inspection means can still automatically correct the parameters of the intermediate deep learning model.

Furthermore, after automatically correcting the parameters of the intermediate deep learning model based on the statistics, the image inspection means continues to determine the accuracy of the intermediate deep learning model based on the validation sample set and the label types corresponding to inspection image samples in the validation sample set. If the accuracy meets the target requirement, such as reaching 80%, the corrected intermediate deep learning model is used as the target deep learning model. If the accuracy does not meet the target requirement, the parameters can be modified again, and then the initial deep learning model or the intermediate deep learning model can be retrained based on the inspection image sample set and the label types corresponding to inspection image samples to obtain the target deep learning model.

In this embodiment, the inspection image sample set includes the training sample set and the validation sample set, the initial detection model is trained based on the training sample set and the label types corresponding to inspection image samples in the training sample set to obtain the intermediate deep learning model, and the intermediate deep learning model is updated based on the validation sample set and the label types corresponding to inspection image samples in the validation sample set to obtain the target deep learning model. Since the target deep learning model is a model obtained by updating the intermediate deep learning model, the accuracy of the target deep learning model is improved, thereby improving the accuracy of defect detection.

In some embodiments, the above defect detection method further includes the following step:
updating the target deep learning model based on the defect detection result and an actual defect result of the target battery.

In this embodiment, the target deep learning model is updated based on the defect detection result and the actual defect result of the target battery. For example, when the detection apparatus is used to actually perform defect detection on the target battery, the inspection images of misjudged target batteries can be added to the inspection image sample set, and the parameters of the target deep learning model can be updated regularly.

In this embodiment, the target deep learning model is updated based on the defect detection result and the actual defect result of the target battery, further improving the accuracy of the target deep learning model.

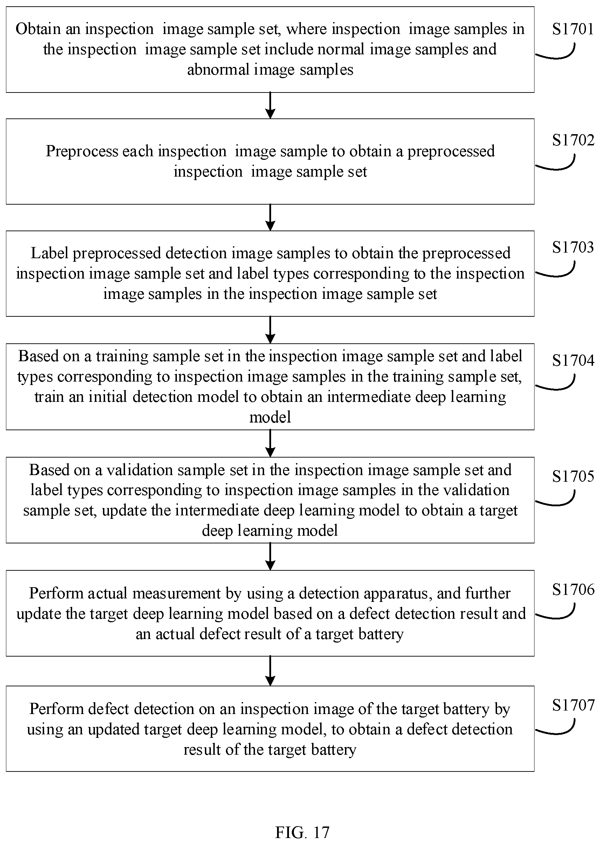

FIG. 17 is an overall schematic flowchart of a defect detection method according to this application. As shown in FIG. 17, in an embodiment, the defect detection method includes the following steps.

S1701. Obtain an inspection image sample set, where inspection image samples in the inspection image sample set include normal image samples and abnormal image samples.

S1702. An image inspection means preprocesses each inspection image sample, for example, sequentially performing blurring processing, convolution processing, and enhancement processing on each inspection image sample to obtain a preprocessed inspection image sample set.

S1703. Label preprocessed inspection image samples to obtain the preprocessed inspection image sample set and label types corresponding to the inspection image samples in the inspection image sample set.

S1704. Based on a training sample set in the inspection image sample set and label types corresponding to inspection image samples in the training sample set, train an initial detection model to obtain an intermediate deep learning model.

S1705. Based on a validation sample set in the inspection image sample set and label types corresponding to inspection image samples in the validation sample set, update the intermediate deep learning model to obtain a target deep learning model.

S1706. Perform actual measurement by using a detection apparatus, and further update the target deep learning model based on a defect detection result and an actual defect result of a target battery.

S1707. Perform defect detection on an inspection image of the target battery by using an updated target deep learning model, to obtain a defect detection result of the target battery.

For the working principle of the defect detection method provided in this embodiment, reference can be made to the detailed description in the above embodiments. Details are not repeated in this embodiment again.

It should be understood that although the steps of the flowchart in the foregoing embodiments are shown sequentially as indicated by the arrows, these steps are not necessarily performed sequentially in the order indicated by the arrows. Unless otherwise specified explicitly, execution of these steps is not limited to a strict order, and the steps may be executed in another order. Moreover, at least some of the steps of the flowchart in the foregoing embodiments may include multiple steps or multiple stages. These steps or stages are not necessarily performed at a same time but may be performed at different times, and these steps or stages are not necessarily performed in a sequential order either but may be performed in a sequential or alternating manner with at least some of other steps or steps or stages in other steps.

Based on the same inventive concept, an embodiment of this application further provides a defect detection apparatus for implementing the foregoing defect detection method. The problem-solving implementation scheme provided by the apparatus is similar to the implementation scheme recorded in the foregoing method. Therefore, for specific limitations in one or more embodiments of the defect detection apparatus provided below, refer to the limitations in the foregoing defect detection method. Details are not repeated herein.

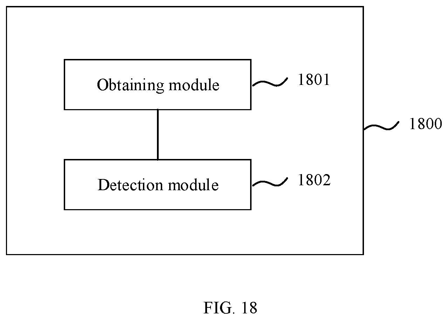

FIG. 18 is a structural block diagram of a defect detection apparatus according to an embodiment of this application. As shown in FIG. 18, this embodiment of this application provides a defect detection apparatus 1800 including an obtaining module 1801 and a detection module 1802, where
the obtaining module 1801 is configured to obtain an inspection image, where the inspection image is an image generated after a radiation penetrates a target battery under inspection; and
the detection module 1802 is configured to obtain a defect detection result of the target battery based on the inspection image and a target deep learning model, where the target deep learning model is a model trained by using inspection image samples of multiple batteries.

In the defect detection apparatus provided in this embodiment, the generated inspection image is obtained after the radiation penetrates the target battery under inspection, and then the defect detection result of the target battery is obtained based on the inspection image and the target deep learning model. Since the target deep learning model is a model trained by using the inspection image samples of the multiple batteries, defect detection can be performed on the inspection image by using the target deep learning model after the inspection image is received. Furthermore, in this application, the defect detection result of the target battery is obtained by using a machine instead of manually inspecting the appearance of the target battery. Therefore, the detection apparatus provided in this application addresses the problem of low defect detection accuracy caused by a manual factor in traditional technologies, thereby improving the accuracy of internal defect detection.

In some embodiments, the detection module 1802 includes:
a preprocessing unit, configured to preprocess the inspection image to obtain a target inspection image, where the preprocessing includes at least one of blurring processing, convolution processing, or enhancement processing; and
a detection unit, configured to input the target inspection image into the target deep learning model to obtain the defect detection result of the target battery.

**In** some embodiments, the defect detection apparatus 1800 further includes:
an obtaining module, configured to obtain an inspection image sample set and label types corresponding to inspection image samples in the inspection image sample set; and
a training module, configured to: based on the inspection image sample set and the label types corresponding to inspection image samples, train an initial detection model to obtain the target deep learning model.

**In** some embodiments, the training module includes:
a training unit, configured to: based on a training sample set and label types corresponding to inspection image samples in the training sample set, train the initial detection model to obtain an intermediate deep learning model; and
an updating unit, configured to: based on a validation sample set and label types corresponding to inspection image samples in the validation sample set, update the intermediate deep learning model to obtain the target deep learning model.

In some embodiments, the defect detection apparatus 1800 further includes:
an updating module, configured to update the target deep learning model based on the defect detection result and an actual defect result of the target battery.

All or some of the modules in the foregoing defect detection apparatus may be implemented by software, hardware, or a combination thereof. Each of the foregoing modules may be embedded as hardware into or independent of a processor in a computer device, or may be stored as software in a memory in a computer device for ease of being called by a processor to perform the foregoing operations corresponding to each module.

In an embodiment, a defect detection system is provided. The defect detection system includes the above detection apparatus, a storage module, a detection display module, and an input/output module. The detection apparatus is configured to obtain an inspection image of a target battery and perform defect detection on the inspection image by using a target deep learning model to obtain a defect detection result of the target battery. The storage module is configured to store the inspection image and the defect detection result of the target battery. The input/output module is configured to interact with a user and the detection apparatus.

In an embodiment, a computer device is provided and includes a memory and a processor. The memory stores a computer program, and when the processor executes the computer program, the steps of the method embodiments are implemented.

In an embodiment, computer-readable storage medium is provided and stores a computer program, and when the computer program is executed by a processor, the steps of the method embodiments are implemented.

In an embodiment, a computer program product is provided, including a computer program. When the computer program is executed by a processor, the steps of the method embodiments are implemented.

Persons of ordinary skill in the art can understand that all or some of the processes of the method in the embodiments may be implemented by a computer program instructing related hardware. The computer program may be stored in a non-volatile computer-readable storage medium, and when the computer program is executed, the processes in the foregoing method embodiments can be included. Any reference to a memory, database, or another medium used and provided in the embodiments of this application may include at least one of non-volatile and volatile memories. The non-volatile memory can include a read-only memory (Read-Only Memory, ROM), a magnetic tape, a floppy disk, a flash memory, an optical memory, a high density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, and the like. The volatile memory may include random access memory (Random Access Memory, RAM), an external cache memory, or the like. As an illustration but not a limitation, the RAM can take various forms, such as static random access memory (Static Random Access Memory, SRAM) or dynamic random access memory (Dynamic Random Access Memory, DRAM). The database used in some embodiments of this application can include at least one of relational database or non-relational database. The non-relational database can include blockchain-based distributed database, or the like, which is not limited thereto. The processor used in some embodiments of this application can be a general-purpose processor, a central processing unit, a graphic processing unit, a digital signal processor, programmable logic, quantum computing-based data processing logic, or the like, which is not limited thereto.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. A detection apparatus, comprising a radiation source, a sample tray, a detector, a control component, and an image inspection means, wherein the radiation source and the detector are respectively disposed on two opposite sides of the sample tray, and a radiation emission direction of the radiation source faces toward the sample tray; and wherein
the detector is configured to receive a radiation that penetrates a target battery, and generate an inspection image of the target battery based on the radiation that penetrates the target battery, wherein the target battery is disposed on the sample tray, and the radiation is a radiation emitted by the radiation source to the target battery;
the image inspection means is configured to receive the inspection image, and perform defect detection on the inspection image by using a target deep learning model to obtain a defect detection result of the target battery, wherein the target deep learning model is a model trained by using inspection image samples of multiple batteries; and
the control component is configured to drive the radiation source and/or the detector to move along a first direction, wherein the first direction is consistent with a length direction of the target battery, so that the detection apparatus performs segmental detection on the target battery.

2. The detection apparatus according to claim 1, wherein:
the sample tray is configured to carry multiple target batteries arranged on the sample tray along the first direction and/or a second direction; and
the control component is further configured to: when the multiple target batteries are arranged on the sample tray along the first direction and/or the second direction, drive the radiation source and/or the detector to move along the first direction and/or the second direction, the first direction being different from the second direction.

3. The detection apparatus according to claim 1, wherein the control component is further configured to drive the radiation source and/or the detector to move along a third direction, to make the detection apparatus operate when a distance between the radiation source and the sample tray is less than a distance between the detector and the sample tray, the third direction being a direction perpendicular to a battery carrying surface of the sample tray.

4. The detection apparatus according to claim 3, wherein the control component is further configured to control, based on a preset target magnification, the radiation source and/or the detector to move along the third direction.

5. The detection apparatus according to claim 4, wherein the target magnification is equal to a ratio of a first length to a second length, the first length being a length of the detector in a width direction, the second length being a minimum side length of a target region detected by the detector, wherein the target region is a surface region of the target battery detected by the detector.

6. The detection apparatus according to claim 1, wherein the detection apparatus further comprises a tray rotation means connected to the sample tray, and the tray rotation means is configured to drive the sample tray to rotate at a second preset angle in a first preset angle.

7. A defect detection method, applied to the detection apparatus according to any one of claims 1 to 6, wherein the method comprises:
obtaining the inspection image, wherein the inspection image is an image generated after a radiation penetrates a target battery under inspection; and
obtaining a defect detection result of the target battery based on the inspection image and the target deep learning model, wherein the target deep learning model is a model trained by using inspection image samples of multiple batteries.

8. The method according to claim 7, wherein the obtaining a defect detection result of the target battery based on the inspection image and the target deep learning model comprises:
preprocessing the inspection image to obtain a target inspection image, wherein the preprocessing comprises at least one of blurring processing, convolution processing, or enhancement processing; and
inputting the target inspection image into the target deep learning model to obtain the defect detection result of the target battery.

9. The method according to claim 8, wherein the method further comprises:
obtaining an inspection image sample set and label types corresponding to inspection image samples in the inspection image sample set; and
based on the inspection image sample set and the label types corresponding to inspection image samples, training an initial detection model to obtain the target deep learning model.

10. The method according to claim 9, wherein the based on the inspection image sample set and the label types corresponding to inspection image samples, training an initial detection model to obtain the target deep learning model comprises:
based on a training sample set and label types corresponding to inspection image samples in the training sample set, training the initial detection model to obtain an intermediate deep learning model; and
based on a validation sample set and label types corresponding to inspection image samples in the validation sample set, updating the intermediate deep learning model to obtain the target deep learning model;
wherein the inspection image sample set comprises the training sample set and the validation sample set.

11. The method according to claim 10, wherein the method further comprises:
updating the target deep learning model based on the defect detection result and an actual defect result of the target battery.

12. A defect detection apparatus, comprising:
an obtaining module, configured to obtain an inspection image, wherein the inspection image is an image generated after a radiation penetrates a target battery under inspection; and
a detection module, configured to obtain a defect detection result of the target battery based on the inspection image and a target deep learning model, wherein the target deep learning model is a model trained by using inspection image samples of multiple batteries.

13. A computer device, comprising a memory and a processor, wherein the memory stores a computer program, and when the computer program is executed by the processor, the steps of the method according to any one of claims 7 to 11 are implemented.

14. A computer-readable storage medium, wherein a computer program is stored thereon, and when the computer program is executed by a processor, the steps of the method according to any one of claims 7 to 11 are implemented.
